# EUROPEAN PATENT APPLICATION

(11) **EP 3 315 577 A1**
(43) Date of publication of application: **02.05.2018**
(21) Application number: 16814072.1
(22) Date of filing: 18.05.2016
(51) Int. Cl.: C09K 3/14, B24B 37/00, C09G 1/02

(54) **POLISHING COMPOSITION**

(30) Priority: 26.06.2015 JP 2015129164
(71) Applicant: Fujimi Incorporated, Kiyosu-shi, Aichi 452-8502 (JP)
(72) Inventor: KAMADA Toru, Kiyosu-shi Aichi 452-8502 (JP); MORINAGA Hitoshi, Kiyosu-shi Aichi 452-8502 (JP)
(74) Representative: Grünecker Patent- und Rechtsanwälte PartG mbB
(86) International application number: PCT/JP2016/064774
(87) International publication number: WO 2016/208301

(57) **Abstract**

To provide a polishing composition in which abrasives are less likely to precipitate and precipitated and agglomerated abrasives easily redisperse. A polishing composition has abrasives, a liquid medium, metal oxide particles, and a water-soluble polymer. The average primary particle diameter of the metal oxide particles is 1/10 or less of the average primary particle diameter of the abrasives and the weight average molecular weight of the water-soluble polymer is 200 or more and 1000 or less.

## Description

### Technical Field

The present invention relates to a polishing composition.

### Background Art

When objects to be polished made of resin is polished using a slurry-like polishing composition, the polishing composition needs to be fed from a storage tank of the polishing composition to a polishing place of the objects to be polished using a tube or the like.

However, abrasives in the polishing composition are likely to precipitate, and therefore have had a possibility of precipitating during the feed, so that the polishing composition has become nonuniform (see, for example, Patent Documents 1 to 5). When a portion having a low abrasive content of the polishing composition which has become nonuniform due to the precipitation of the abrasives is used for polishing, there has been a possibility that the polishing removal rate decreases. Moreover, the abrasives which have precipitated and agglomerated are less likely to redisperse, and therefore, when the polishing composition containing the agglomerating abrasives is used for polishing, there has been a possibility that polishing damages are generated on the polished surface of the objects to be polished. In particular, polishing damages are likely to be generated on the objects to be polished made of resin.

### Citation List

### Patent Literatures

PTL 1: JP 4462593
PTL 2: JP 5-229853 A
PTL 3: JP 3949466
PTL 4: JP 5568641
PTL 5: JP 2002-329688 A

### Summary of Invention

### Technical Problem

Then, it is an object of the present invention to solve the problems of the prior arts described above and provide a polishing composition in which abrasives are less likely to precipitate and precipitated and agglomerated abrasives easily redisperse.

### Solution to Problem

In order to solve the above-described problems, a polishing composition according to one aspect of the present invention has abrasives, a liquid medium, metal oxide particles, and a water-soluble polymer, in which the average primary particle diameter of the metal oxide particles is 1/10 or less of the average primary particle diameter of the abrasives and the weight average molecular weight of the water-soluble polymer is 200 or more and 1000 or less.

### Advantageous Effects of Invention

In the polishing composition according to the present invention, the abrasives are less likely to precipitate and the precipitated and agglomerated abrasives easily redisperse.

### Brief Description of Drawing

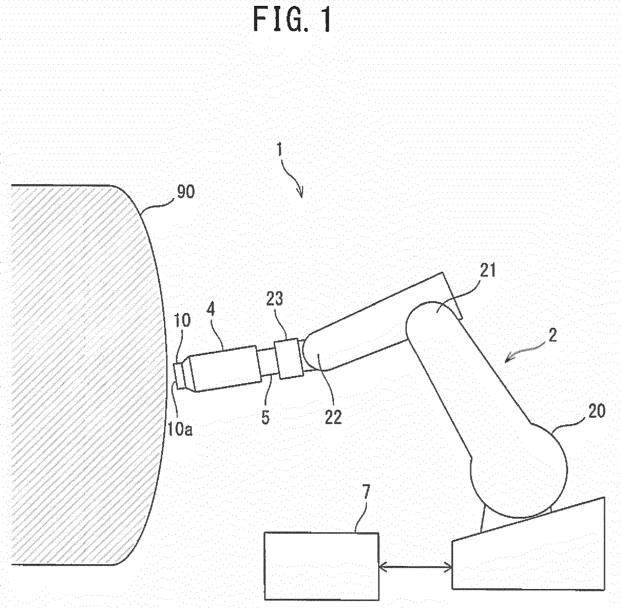

FIG. 1 is a view illustrating the configuration of an automatic polishing device to be used in one embodiment of a polishing method using a polishing composition according to the present invention.

### Description of Embodiments

An embodiment of the present invention is described in detail. A polishing composition of this embodiment contains abrasives, a liquid medium, metal oxide particles, and a water-soluble polymer. The average primary particle diameter of the metal oxide particles is 1/10 or less of the average primary particle diameter of the abrasives and the weight average molecular weight of the water-soluble polymer is 200 or more and 1000 or less.

In a polishing composition of such a configuration, the abrasives are less likely to precipitate and precipitated and agglomerated abrasives easily redisperse. Accordingly, the polishing composition is less likely to become nonuniform and there are few agglomerated abrasives. Therefore, when objects to be polished is polished using the polishing composition of this embodiment, the objects to be polished can be polished at a high polishing removal rate and polishing damages are less likely to be generated on the polished surface of the objects to be polished.

Hereinafter, the polishing composition of this embodiment is described in more detail.

### 1. Objects to be polished

The objects to be polished is not particularly limited and, for example, resin, single crystals or polycrystals (ceramics) of oxide, carbide, nitride, and boride of silicon, aluminum, zirconium, calcium, and barium, metals, such as magnesium, aluminum, titanium, iron, nickel, cobalt, copper, zinc, and manganese, and alloys containing the metals as the main component may be acceptable and, among the above, resin is preferable.

In the case of resin, the objects to be polished may be a member (resin member) made of resin or a resin coating film applied to the surface of a base material. The resin type is not particularly limited and, for example, a urethane resin, an acrylic resin, and a polycarbonate resin are mentioned. Therefore, the type of the resin configuring the resin coating film is also not particularly limited and a urethane resin, an acrylic resin, and the like are mentioned and the resin coating film may be a transparent clear coating film. The thickness of the resin coating film is not particularly limited and may be set to 100 µm or less and may be set to 10 µm or more and 40 µm or less.

The polishing composition of this embodiment is usable for production of a coated member formed by covering the surface of the base material with a resin coating film. When the outer surface of the resin coating film of the coated member is polished using the polishing composition of this embodiment, the resin coating film can be polished at a high polishing removal rate and polishing damages are less likely to be generated on the outer surface of the resin coating film which is the polished surface (hereinafter sometimes also referred to as "resin coated surface"), and therefore the coated member having the resin coating film having less waviness and few polishing damages and having beautiful gloss can be produced at high productivity.

The type of the coated member (i.e. , intended use of resin coating film) is not particularly limited and, for example, an automobile body, a railroad vehicle, an airplane, and a resin member are mentioned. The resin coating film covering the surface of an automobile body has a large area and a curved surface. However, the polishing composition of this embodiment is suitable for polishing of the outer surface of such a resin coating film.

Specific examples of the material of the base material include iron alloys, such as stainless steel, an aluminum alloy, resin, and ceramics. The iron alloy is used for common vehicles including automobiles, as a steel plate, for example. For example, stainless steel is used for a railroad vehicle. The steel plate may be subjected to surface coating. The aluminum alloy is used for parts of automobiles, airplanes, and the like. The resin is used for resin members, such as a bumper.

### 2. Abrasives

The content of the abrasives in the polishing composition of this embodiment may be set to 0.1% by mass or more and 50% by mass or less based on the entire polishing composition. When the content of the abrasives is 0.1% by mass or more, objects to be polished (for example, resin) can be polished at a high polishing removal rate. When the content of the abrasives is 50% by mass or less, the cost of the polishing composition can be reduced and the generation of polishing damages on the polished surface of the objects to be polished (for example, resin) after polishing can be further prevented. The lower limit of the content of the abrasives is more preferably set to 0.5% by mass or more and more preferably set to 1.0% by mass or more. The upper limit of the content of the abrasives is more preferably set to 40% by mass or less and still more preferably set to 30% by mass or less.

The physical properties of the abrasives in the polishing composition of this embodiment are not particularly limited and the average primary particle diameter of the abrasives is preferably 0.1 µm or more and 4.5 µm or less. When the average primary particle diameter of the abrasives is 0.1 µm or more and 4.5 µm or less, an effect that a fixed polishing removal rate can be maintained without generating scratches is demonstrated. The average primary particle diameter of the abrasives is more preferably 1.0 µm or less and still more preferably 0.5 µm or less. The average primary particle diameter of the abrasives can be determined as an average value of the primary particle diameters determined as the diameters of circles having the same area as the measured area of the particles in a scanning electron microscope image, for example.

The average secondary particle diameter of the abrasives is preferably 0.1 µm or more and 4.5 µm or less. When the average secondary particle diameter of the abrasives is 0.1 µm or more and 4.5 µm or less, the surface roughness of the polished surface of the objects to be polished (for example, resin) after polishing is excellent and polishing damages, such as scratches, are less likely to be generated on the polished surface of the objects to be polished (for example, resin) after polishing. The lower limit value of the average secondary particle diameter of the abrasives is more preferably 0.2 µm or more. The upper limit value of the average secondary particle diameter of the abrasives is more preferably 4.0 µm or less and still more preferably 3.5 µm or less. The average secondary particle diameter of the abrasives is measured using a laser diffraction/scattering particle diameter distribution meter LA-950 manufactured by HORIBA, LTD., for example.

The type of the abrasives blended in the polishing composition of this embodiment is not particularly limited and may be any one of inorganic particles, organic particles, and organic-inorganic composite particles. Specific examples of the inorganic particles include, for example, particles of metal oxides, such as aluminum oxide (Al₂O₃), silicon oxide (SiO₂), cerium oxide (CeO₂), titanium oxide (TiO₂), and zirconium oxide (ZrO₂), and particles of ceramics, such as silicon nitride, silicon carbide, and boron nitride. Specific examples of the organic particles include polymethyl methacrylate (PMMA) particles, for example. The abrasives may be used alone or in combination of two or more kinds thereof.

Among the above, aluminum oxide particles are preferable. The physical properties of the aluminum oxide particles are not particularly limited and the specific surface area of the aluminum oxide particles is preferably 5 m²/g or more and 50 m²/g or less. The α-transformation rate of the aluminum oxide particles is preferably 40% or more.

When the specific surface area of the aluminum oxide particles is 5 m²/g or more and 50 m²/g or less, waviness of the polished surface can be removed by polishing using the polishing composition of this embodiment and polishing damages are less likely to be generated on the polished surface. Therefore, the polished surface having beautiful gloss can be obtained. The lower limit value of the specific surface area of the aluminum oxide particles is more preferably 8 m²/g or more and still more preferably 10 m²/g or more. The upper limit value of the specific surface area of the aluminum oxide particles is more preferably 45 m²/g or less and still more preferably 40 m²/g or less. The specific surface area of the aluminum oxide particles can be measured by a BET method, for example.

When the α-transformation rate of the aluminum oxide is 40% or more, polishing can be performed at a high polishing removal rate. The α-transformation rate of the aluminum oxide is more preferably 45% or more and still more preferably 50% or more.

A method for producing the aluminum oxide particles is not particularly limited. The aluminum oxide having the physical properties described above can be produced by a method including obtaining aluminum hydroxide by various methods, such as a Bayer process (wet process), an aluminum alkoxide process, an alum method, and a hydrothermal synthesis method, and then forming the same into an aluminum oxide by heat treatment.

### 3. Liquid medium

The liquid medium functions as a dispersion medium or a solvent for dispersing or dissolving the components (abrasives, metal oxide particles, water-soluble polymer, additive, and the like) of the polishing composition. Examples of the liquid medium include water and an organic solvent. The liquid media can be used alone or as a mixture of two or more kinds thereof and water is preferably contained. However, water containing impurities as less as possible is preferably used from the viewpoint of preventing the blocking of the action of each component of the polishing composition. Specifically, pure water or ultrapure water obtained by removing impurity ions with an ion exchange resin, and then removing foreign substances through a filter or distilled water is preferable.

### 4. Metal oxide particles

In the polishing composition of this embodiment, metal oxide particles are blended as a dispersibility improving agent for increasing the dispersibility in the liquid medium of the abrasives and preventing precipitation. The abrasives are uniformly dispersed in the polishing composition by the metal oxide particles, and therefore the abrasives efficiently act on objects to be polished and a high polishing removal rate is obtained.

The content of the metal oxide particles in the polishing composition of this embodiment may be set to 0.01% by mass or more and 10% by mass or less based on the entire polishing composition. When the content of the metal oxide particles is 0.01% by mass or more and 10% by mass or less, the dispersibility in the liquid medium of the abrasives is excellent and the precipitation of the abrasives is less likely to occur. The lower limit value of the content of the metal oxide particles is preferably set to 0.1% by mass or more and more preferably set to 0.4% by mass or more. The upper limit value of the content of the metal oxide particles is more preferably set to 5.0% by mass or less and more preferably set to 1.0% by mass or less.

The average primary particle diameter of the metal oxide particles needs to be set to 1/10 or less of the average primary particle diameter of the abrasives. With such a configuration, the metal oxide particles are sufficiently small to the abrasives and can efficiently adhere to the surface of the abrasives, and therefore an effect of improving the dispersibility of the abrasives is demonstrated.

The average primary particle diameter of the metal oxide particles is preferably 10 nm or more and 50 nm or less. The average secondary particle diameter of the metal oxide particles is preferably 0.1 µm or more and 1.5 µm or less.

When the average primary particle diameter of the metal oxide particles is 10 nm or more and 50 nm or less, the dispersibility in the liquid medium of the abrasives is excellent. The average primary particle diameter of the metal oxide particles can be determined as an average value of the primary particle diameters determined as the diameters of circles having the same area as the measured area of the particles in a scanning electron microscope image, for example.

When the average secondary particle diameter of the metal oxide particles is 0.1 µm or more and 1.5 µm or less, the metal oxide particles maintain a moderate agglomeration state, whereby an effect that the abrasives can be efficiently dispersed is demonstrated. The average secondary particle diameter of the metal oxide particles is measured using a dynamic light scattering meter UPA-UT151 manufactured by Nikkiso Co., Ltd., or a laser diffraction/scattering particle diameter distribution meter LA-950 manufactured by HORIBA, LTD., for example.

The type of the metal oxide particles is not particularly limited and colloidal substances as a substance containing fine particles are usable. Examples of the metal oxide particles include colloidal alumina, colloidal silica, colloidal zirconia, colloidal titania, alumina sol, silica sol, zirconia sol, titania sol, fumed alumina, fumed silica, fumed zirconia, fumed titania, and the like. The metal oxide particles may be used alone or in combination of two or more kinds thereof.

Among the metal oxide particles, fumed alumina is more preferable. When the metal oxide particle is fumed alumina and the abrasive is aluminum oxide, the most excellent dispersibility is exhibited.

### 5. Water-soluble polymer

In the polishing composition of this embodiment, a water-soluble polymer as a caking inhibitor preventing caking of the abrasives is blended. Even when the abrasives precipitate and agglomerate by the action of the water-soluble polymer, the agglomerating abrasives easily redisperse, and therefore the agglomerating abrasives are less likely to be used for polishing and polishing damages, such as scratches, are less likely to be generated on the polished surface of the objects to be polished (for example, resin) after polishing. The caking refers to a phenomenon in which fine particles agglomerate to solidify.

The content of the water-soluble polymer in the polishing composition of this embodiment may be set to 0.001% by mass or more and 0.5% by mass or less based on the entire polishing composition. When the content of the water-soluble polymer is 0.001% by mass or more, the performance of preventing the caking of the abrasives is excellent, and even when the abrasives precipitate and agglomerate, the agglomerating particles easily redisperse. When the content of the water-soluble polymer is 0.5% by mass or less, an effect that a remarkable reduction in polishing removal rate can be prevented is demonstrated. The lower limit of the content of the water-soluble polymer is preferably set to 0.01% by mass or more. The upper limit is more preferably set to 0.1% by mass or less.

The water-soluble polymer type is not particularly limited and polyethers are mentioned, for example. Specific examples of the polyethers include polyethylene glycol, polypropylene glycol, or alkyl ethers thereof and polyethylene glycol is more preferable. Specific examples of the other water-soluble polymers include polyacrylic acid and (poly)alkylene polyamine. The water-soluble polymers may be used alone or in combination of two or more kinds thereof.

The weight average molecular weight of the water-soluble polymer is 200 or more and 1000 or less. With such a configuration, an effect of exhibiting excellent caking preventing capability with few possibilities of impairing the polishing force of the abrasives is demonstrated. The upper limit value of the weight average molecular weight of the water-soluble polymer is preferably less than 600 and more preferably 400 or less.

### 6. Other additives

In the polishing composition of this embodiment, in order to increase the performance, various additives, such as a pH adjuster, a surfactant, a polishing removal accelerator, an oxidizer, a complexing agent, an anticorrosive, and an antifungal agent may be added as desired. Hereinafter, examples of the additives which can be blended in the polishing composition of this embodiment are described.

### (1) pH adjuster

The pH value of the polishing composition can be adjusted by the addition of a pH adjuster. The pH adjuster to be used as necessary in order to adjust the pH value of the polishing composition to a desired value may be either acid or alkali and may be either an inorganic compound or an organic compound. The pH can be varied according to objects to be polished and the pH range is usually in the range of 1 to 13. In particular, when the objects to be polished is resin, the pH is preferably in the range of 1 to 9, more preferably in the range of 2 to 8, and still more preferably in the range of 3 to 6.

Specific examples of the acid as the pH adjuster include inorganic acids and organic acids, such as carboxylic acid and organic sulfuric acid. Specific examples of the inorganic acids include sulfuric acid, nitric acid, boric acid, carbonic acid, hypophosphorous acid, phosphorous acid, phosphoric acid, and the like. Specific examples of the carboxylic acids include formic acid, acetic acid, propionic acid, butyric acid, valeric acid, 2-methylbutyric acid, n-hexanoic acid, 3,3-dimethyl butyric acid, 2-ethyl butyric acid, 4-methylpentanoic acid, n-heptanoic acid, 2-methyl hexanoic acid, n-octanoic acid, 2-ethyl hexanoic acid, benzoic acid, glycolic acid, salicylic acid, glyceric acid, oxalic acid, malonic acid, succinic acid, glutaric acid, adipic acid, pimelic acid, maleic acid, phthalic acid, malic acid, tartaric acid, citric acid, lactic acid, and the like. Specific examples of the organic sulfuric acid include methanesulfonic acid, ethanesulfonic acid, isethionic acid, and the like. The acids may be used alone or in combination of two or more kinds thereof.

Specific examples of bases as the pH adjuster include alkali metal hydroxide or a salt thereof, alkaline earth metal hydroxide or a salt thereof, quaternary ammonium hydroxide or a salt thereof, ammonia, amines, and the like.

Specific examples of alkali metals include potassium, sodium, and the like. Specific examples of alkaline earth metals include calcium, strontium, and the like. Specific examples of salts include carbonate, hydrogencarbonate, sulfate, acetate, and the like. Specific examples of quaternary ammonium include tetramethylammonium, tetraethylammonium, tetrabutylammonium, and the like.

Examples of a quaternary ammonium hydroxide compound include quaternary ammonium hydroxide or a salt thereof. Specific examples include tetramethylammonium hydroxide, tetraethylammonium hydroxide, tetrabutylammonium hydroxide, and the like.

Specific examples of amine include methylamine, dimethylamine, trimethylamine, ethylamine, diethylamine, triethylamine, ethylenediamine, monoethanolamine, N-(β-aminoethyl)ethanolamine, hexamethylenediamine, diethylenetriamine, triethylenetetramine, anhydrous piperazine, piperazine hexahydrate, 1-(2-aminoethyl)piperazine, N-methylpiperazine, guanidine, and the like.

The bases may be used alone or in combination of two or more kinds thereof.

Among the bases, ammonia, an ammonium salt, alkali metal hydroxide, an alkali metal salt, a quaternary ammonium hydroxide compound, and amine are preferable and, further, ammonia, a potassium compound, sodium hydroxide, a quaternary ammonium hydroxide compound, ammonium hydrogencarbonate, ammonium carbonate, sodium hydrogencarbonate, and sodium carbonate are more preferable.

It is more preferable for the polishing composition to further contain a potassium compound as the base from the viewpoint of preventing metal pollution. Examples of the potassium compound include hydroxide of potassium or a potassium salt. Specific examples include potassium hydroxide, potassium carbonate, potassium hydrogencarbonate, potassium sulfate, potassium acetate, potassium chloride, and the like.

In place of or in combination with the acids mentioned above, salts, such as ammonium salts or alkali metal salts of the acids, may be used as the pH adjuster serving as a buffer. In particular, when the combination of the acid and a buffer is a combination of a weak acid and a strong base, a combination of a strong acid and a weak base, or a combination of a weak acid and a weak base, a pH buffering action can be expected.

### (2) Surfactant

To the polishing composition, a surfactant may be added. The surfactant has an action of giving hydrophilicity to the polished surface of the objects to be polished (for example, resin) after polishing, and therefore can improve the cleaning efficiency of the polished surface of the objects to be polished (for example, resin) after polishing to prevent the adhesion of dirt and the like. As the surfactant, any one of anionic surfactants, cationic surfactants, amphoteric surfactants, and nonionic surfactants are usable.

Specific examples of the anionic surfactants include polyoxyethylene alkyl ether acetate, polyoxyethylene alkyl sulfuric acid ester, alkyl sulfuric acid ester, polyoxyethylene alkyl sulfate, alkyl sulfate, alkyl benzene sulfonate, alkylphosphoric acid ester, polyoxyethylene alkyl phosphoric acid ester, polyoxyethylene sulfosuccinate, alkylsulfosuccinate, alkyl naphthalene sulfonate, alkyl diphenyl ether disulfonate, or salts thereof.

Specific examples of the cationic surfactants include an alkyl trimethylammonium salt, an alkyl dimethylammonium salt, an alkyl benzyl dimethylammonium salt, and an alkyl amine salt.

Specific examples of the amphoteric surfactants include alkyl betaine and alkyl amine oxide.

Specific examples of the nonionic surfactants include polyoxyethylene alkyl ether, polyoxyalkylene alkyl ether, sorbitan fatty acid ester, glycerine fatty acid ester, polyoxyethylene fatty acid ester, polyoxyethylene alkyl amine, and alkyl alkanol amide.

The surfactants may be used alone or in combination of two or more kinds thereof.

### (3) Polishing removal accelerator (oxidizer)

To the polishing composition, a polishing removal accelerator may be added. The polishing removal accelerator has a role of chemically polishing objects to be polished and acts on the surface (for example, outer surface of resin coating film) of objects to be polished (for example, resin) to thereby enable a remarkable increase in processing efficiency.

Specific examples of the polishing removal accelerator include one containing at least one kind of salt selected from the group consisting of metal salts of inorganic acids, metal salts of organic acids, ammonium salts of inorganic acids, and ammonium salts of organic acids.

The inorganic acid may be any one of nitric acid, sulfuric acid, and hydrochloric acid. The organic acid may be any one of oxalic acid, lactic acid, acetic acid, formic acid, citric acid, tartaric acid, malic acid, gluconic acid, glycolic acid, and malonic acid. The metal salt may be any one of an aluminum salt, a nickel salt, a lithium salt, a magnesium salt, a sodium salt, and a potassium salt.

The polishing removal accelerators may be used alone or in combination of two or more kinds thereof.

As the polishing removal accelerator, an oxidizer may be added. Specific examples of the oxidizer include hydrogen peroxide, peroxide, nitrate, iodate, periodate, hypochlorite, chlorite, chlorate, perchlorate, persulfate, dichromate, permanganate, ozone water, a silver (II) salt, an iron (III) salt, and the like.

### (4) Complexing agent

To the polishing composition, an agent having a chelating action (complexing agent) may be added. The complexing agent confines metal ions and the like originating from a polishing device, objects to be polished, and the like, and therefore prevents metal contamination of the polished surface by the metal ions, so that it can be expected to obtain a good polished surface.

Examples of the complexing agent include organic acids, amino acids, nitrile compounds, chelating agents other than the substances above, and the like, for example. Specific examples of the organic acids include oxalic acid, malonic acid, succinic acid, glutaric acid, adipic acid, pimelic acid, maleic acid, phthalic acid, malic acid, tartaric acid, citric acid, and the like, for example. In place of or in combination with the organic acid, salts, such as alkali metal salts of organic acids may be used.

Specific examples of the amino acids include glycine, α-alanine, β-alanine, N-methyl glycine, N,N-dimethylglycine, 2-aminobutyric acid, norvaline, valine, leucine, norleucine, isoleucine, phenylalanine, proline, sarcosine, ornithine, lysine, taurine, serine, threonine, homoserine, tyrosine, bicin, tricine, 3,5-diiodotyrosine, β-(3,4-dihydroxyphenyl)-alanine, thyroxine, 4-hydroxy-proline, cystein, methionine, ethionine, lanthionine, cystathionine, cystine, cysteic acid, aspartic acid, glutamic acid, S-(carboxymethyl)-cystein, 4-aminobutyric acid, asparagine, glutamine, azaserine, arginine, canavanine, citrulline, δ-hydroxy-lysine, creatine, histidine, l-methyl-histidine, 3-methyl-histidine, tryptophan, and the like.

Specific examples of the nitrile compounds include acetonitrile, aminoacetonitrile, propionitrile, butyronitrile, isobutyronitrile, benzonitrile, glutarodinitrile, methoxyacetonitrile, and the like, for example.

Specific examples of chelating agents other than the substances above include iminodiacetic acid, nitrilotriacetic acid, diethylenetriamine pentaacetic acid, ethylenediaminetetraacetic acid, N,N,N-trimethylene phosphonic acid, ethylenediamine-N,N,N',N'-tetramethylene sulfonic acid, transcyclohexanediaminetetraacetic acid, 1,2-diaminopropane tetracetic acid, glycol ether diamine tetracetic acid, ethylene diamine orthohydroxy phenylacetic acid, ethylene diaminedisuccinic acid (SS isomer), N-(2-carboxylateethyl)-L-aspartic acid, β-alanine diacetic acid, 2-phosphonobutane-1,2,4-tricarboxylic acid, 1-hydroxyethylidene-1,1-diphosphonic acid, N,N'-bis(2-hydroxybenzyl)ethylene diamine-N,N'-diacetic acid, 1,2-dihydroxy benzene 4,6-disulfonic acid, and the like.

The complexing agents may be used alone or in combination of two or more kinds thereof.

### (5) Anticorrosive

To the polishing composition, an anticorrosive may be added. The anticorrosive forms a protective film on the metal surface, and thus can be expected to prevent the corrosion of a polishing device, objects to be polished, a fixture, and the like.

A usable anticorrosive is not particularly limited and is a heterocyclic compound or a surfactant, for example. The number of heterocyclic rings in the heterocyclic compound is not particularly limited. The heterocyclic compound may be a monocyclic compound or may be a polycyclic compound having an condensed ring. The anticorrosives may be used alone or in combination of two or more kinds thereof.

Specific examples of the heterocyclic compound usable as the anticorrosive include, for example, nitrogen containing heterocyclic compounds, such as a pyrrole compound, a pyrazole compound, an imidazole compound, a triazole compound, a tetrazole compound, a pyridine compound, a pyrazine compound, a pyridazine compound, a pyrindine compound, an indolizine compound, an indole compound, an isoindole compound, an indazole compound, a purine compound, a quinolizine compound, a quinoline compound, an isoquinoline compound, a naphthyridine compound, a phthalazine compound, a quinoxaline compound, a quinazoline compound, a cinnoline compound, a buterizine compound, a thiazole compound, an isothiazole compound, an oxazole compound, an isooxazole compound, and a furazan compound.

### (6) Antifungal agent and Antiseptic

To the polishing composition, antifungal agents and antiseptics may be added. Specific examples of the antifungal agents and the antiseptics include isothiazoline antiseptics (for example, 2-methyl-4-isothiazoline-3-one and 5-chloro-2-methyl-4-isothiazoline-3-one), paraoxybenzoates, and phenoxyethanol. The antifungal agents and antiseptics may be used alone or in combination of two or more kinds thereof.

### 7. Method for producing polishing composition

A method for producing a polishing composition of this embodiment is not particularly limited and the polishing composition can be produced by stirring and mixing abrasives, metal oxide particles, and a water-soluble polymer and, as desired, various additives in a liquid medium, such as water. The temperature in the mixing is not particularly limited and is preferably 10°C or more and 40°C or less. The resultant mixture may be heated in order to increase the dissolution rate. The mixing time is also not particularly limited.

### 8. Polishing method (Method for producing coated member)

The polishing composition of this embodiment can be used for polishing of resin. Herein, an example of a method for polishing a resin coated surface is described. The configuration of a polishing device performing the polishing is not particularly limited and a common polishing device, such as a one-side polisher, a double-side polisher, or a lens polisher, is usable and an automatic polishing device 1 of FIG. 1 is usable, for example.

The automatic polishing device 1 of FIG. 1 has a robot arm 2, a polishing pad 10, a polishing tool 4, a pressing force detector 5, and a controller 7. The robot arm 2 has a plurality of joints 20, 21, 22, and therefore can move a tip portion 23, to which the polishing pad 10, the polishing tool 4, and the pressing force detector 5 are attached, in a plurality of directions. A coated member 90 to be polished is obtained by coating the surface of a base material with a resin coating film. The resin coated surface of the coated member 90 has a large area and a curved surface.

The polishing tool 4 is attached to the tip portion 23 through the pressing force detector 5 and rotates the polishing pad 10 by a driving unit incorporated therein with a direction perpendicular to a polishing surface 10a of the polishing pad 10 as the rotation axis. The driving unit of the polishing tool 4 is not particularly limited. In general, a single action, a double action, a gear action, and the like are used and a double action is preferred in polishing of the coated member. The controller 7 controls the behavior of the robot arm 2 and the rotation of the polishing pad 10 by the polishing tool 4. It is configured so that the polishing composition is supplied between the polishing surface 10a of the polishing pad 10 and the resin coated surface of the coated member 90 from a polishing composition supply mechanism which is not illustrated.

The controller 7 presses the polishing surface 10a of the polishing pad 10 against the resin coated surface of the coated member 90 by the robot arm 2 to rotate the polishing pad 10 to thereby polish the resin coated surface of the coated member 90. The pressing force detector 5 detects the pressing force of the polishing surface 10a of the polishing pad 10 against the resin coated surface of the coated member 90. The controller 7 may adjust the force of pressing the polishing surface 10a against the resin coated surface of the coated member 90 based on the detection result of the pressing force obtained by the pressing force detector 5. Moreover, the controller 7 may control the robot arm 2 so that the polishing pad 10 moves on the resin coated surface of the coated member 90 while maintaining the pressing force of the polishing surface 10a against the resin coated surface of the coated member 90 at a fixed pressing force based on the detection result of the pressing force obtained by the pressing force detector 5.

However, the polishing method using the polishing composition of this embodiment is not applied while being limited to the above-described automatic polishing device 1. For example, the polishing method using the polishing composition of this embodiment may be applied to a case where the polishing pad is attached to the tip of a hand polisher, and then a polishing operator manually moves the hand polisher to polish the resin coated surface. The driving unit of the hand polisher is not particularly limited. In general, a single action, a double action, a gear action, and the like are used and a double action is preferred in the polishing of the coated member.

When polishing the resin coated surface, the resin coated surface may be polished while maintaining the polishing temperature at the glass transition point of the resin configuring the resin coating film or less. The resin coating film (particularly self-repairing coating film) is susceptible to temperature changes and is difficult to perform good polishing. However, when polishing is performed while maintaining the polishing temperature at the glass transition point of the resin configuring the resin coating film or less, good polishing is facilitated. More specifically, it becomes easier to remove waviness of the resin coated surface and polishing damages are much less likely to be generated on the resin coated surface. Therefore, it becomes easier to obtain a resin coated surface having beautiful gloss. Specifically, the polishing is preferably performed while maintaining the polishing temperature at 50°C or less (preferably 30°C or less) .

A method for measuring the polishing temperature is not particularly limited. For example, the polishing temperature can be acquired by measuring the temperature of the polishing surface 10a of the polishing pad 10 using an infrared thermometer at the end of polishing or the like.

The material of the polishing pad 10 is not particularly limited and a common nonwoven fabric, suede, polyurethane foam, polyethylene foam, porous fluororesin, and the like are usable without limitation. As the polishing pad 10, one in which a groove in which a liquid polishing composition stays is provided in the polishing surface 10a is usable.

When polishing the resin coated surface, the polishing may be performed with a polishing pad having a soft polishing surface. The hardness of the soft polishing surface is preferably less than 50 and more preferably 40 or less, for example, in terms of the A hardness according to JIS K 6253. The hardness of the soft polishing surface is preferably 30 or more in terms of the A hardness. Within such a range, the surface roughness of the resin coated surface is further improved.

The material of the polishing pad having the soft polishing surface is not particularly limited and may be a material having the hardness mentioned above and a nonwoven fabric and suede are mentioned, for example.

Or, when polishing the resin coated surface, first polishing may be performed with a second polishing pad having a polishing surface harder than a polishing surface of a first polishing pad having a soft polishing pad, and then second polishing may be performed with the first polishing pad having a soft polishing pad.

The hardness of the soft polishing surface of the first polishing pad is preferably less than 50 and more preferably 40 or less, for example, in terms of the A hardness according to JIS K 6253. The hardness of the soft polishing surface of the first polishing pad is preferably 30 or more in terms of the A hardness. With such a range, the surface roughness of the resin coated surface is further improved.

Furthermore, it is preferable that the hardness of the hard polishing surface of the second polishing pad is higher than the hardness of the soft polishing surface of the first polishing pad and is preferably 50 or more and more preferably 60 or more, for example, in terms of the A hardness according to JIS K 6253. The hardness of the hard polishing surface of the second polishing pad is preferably 95 or less and more preferably 80 or less in terms of the A hardness. With such a range, the removal of the waviness of the resin coated surface is further facilitated.

The material of the first polishing pad is not particularly limited and may be a material having the hardness mentioned above and a nonwoven fabric and suede are mentioned, for example. The material of the second polishing pad is not particularly limited and may be a material having the hardness mentioned above and polyurethane foam and a nonwoven fabric are mentioned, for example.

When polishing the resin coated surface, it is preferable to perform the polishing while always fixing the pressing force of the polishing surface 10a of the polishing pad 10 against the resin coated surface at a fixed pressing force. Thus, the entire resin coated surface can be uniformly polished.

A method for supplying the polishing composition between the polishing surface 10a of the polishing pad 10 and the resin coated surface of the coated member 90 is not particularly limited. For example, a method including supplying the polishing composition with a pump or the like through a hole or the like opened to the inside of the polishing pad, a method including supplying the polishing composition to the outside of the polishing pad, a method including supplying the polishing composition by spraying with a spray nozzle or the like, and the like are adopted. The supply amount of the polishing composition is not limited. It is preferable that the polishing surface 10a of the polishing pad 10 is always coated with the polishing composition. In the polishing of the resin coated surface of the coated member 90, the polishing may be performed using an undiluted solution of the polishing composition of this embodiment as it is or the polishing may be performed using a dilution of the polishing composition obtained by diluting an undiluted solution twice or more with a diluent, such as water.

### [Examples]

Hereinafter, the present invention is more specifically described with reference to Examples and Comparative Examples. Abrasives, dispersibility improving agents, and caking inhibitors of the compounding amounts (with the balance water) shown in Table 1 were added to and mixed with water to prepare polishing compositions of Examples 1 to 7 and Comparative Examples 1 to 13. Then, the dispersibility of the abrasives of the polishing compositions and the redispersibility of the precipitating abrasives were evaluated and a resin coated surface was polished using the polishing compositions.

All the abrasives are aluminum oxide particles. The average primary particle diameter thereof is 0.35 µm, the average secondary particle diameter is 0.35 µm, the specific surface area is 12.3 m²/g, and the α-transformation rate is 81%. The average primary particle diameter of the abrasives was measured using image analysis software. The measurement was carried out for 1000 or more aluminum oxide particles in total selected from a scanning electron microscope image. The average secondary particle diameter was measured using a laser diffraction/scattering particle diameter distribution meter LA-950 manufactured by HORIBA, LTD. The specific surface area was measured using a Flow Sorb II 2300 manufactured by Micromeritics. The α-transformation rate is determined from the integration intensity ratio of the (113) plane diffraction lines by X-ray diffraction measurement.

The dispersibility improving agent is colloidal silica in Example 1 and Comparative Example 3, fumed alumina in Examples 2 to 7 and Comparative Examples 1, 2, 4, 5, and 12, aluminum oxide in Comparative Examples 6 and 7, and sodium pyrophosphate in Comparative Examples 10, 11, and 13. The average primary particle diameter and the average secondary particle diameter of the colloidal silica, fumed alumina, and aluminum oxide are as shown in Table 1.

The average secondary particle diameter of the colloidal silica was measured using a dynamic light scattering meter UPA-UT151 manufactured by Nikkiso Co., Ltd. The average secondary particle diameter of the fumed alumina and the aluminum oxide was measured using a laser diffraction/scattering particle diameter distribution meter LA-950 manufactured by HORIBA, LTD. The average primary particle diameter of the colloidal silica, fumed alumina, and aluminum oxide was measured using image analysis software. The measurement was carried out for 1000 or more alumina particles in total selected from a scanning electron microscope image.

The caking inhibitor is polyethylene glycol (PEG) having a weight average molecular weight of 400 in Examples 1 to 5 and Comparative Examples 3, 8, and 11, polyethylene glycol (PEG) having a weight average molecular weight of 200 in Example 6, and polyethylene glycol (PEG) having a weight average molecular weight of 1000 in Example 7. The caking inhibitor is polyethylene glycol (PEG) having a weight average molecular weight of 2000 in Comparative Example 1, polyethylene glycol (PEG) having a weight average molecular weight of 4000 in Comparative Example 2, and sodium polyacrylate (SPA) having a weight average molecular weight of 2000 in Comparative Examples 12 and 13.

**[Table 1]**

| | Compounding amount ol abrasives (% by mass) | Dispersibility improving agent | | | | Caking inhibitor | | | Dispersibility | Redispersibilily | Polishing removal rate | Scratch |
|---|---|---|---|---|---|---|---|---|---|---|---|---|
| | | Type | Average primary particle diameter (nm) | Average secondary particle diameter (µm) | Compounding amount (% by mass) | Type | Average molecular weight | Compounding amount (% by mass) | | | | |
| Ex. 1 | 10 | Colloidal silica | 25 | 0.04 | 0.5 | PEG | 400 | 0.01 | ○ | ○ | ○ | ○ |
| Ex. 2 | 10 | Fumed alumina | 13 | 0.2 | 1 | PEG | 400 | 0.01 | ○ | ○ | ○ | ○ |
| Ex. 3 | 10 | Fumed alumina | 13 | 02 | 0.5 | PEG | 400 | 0.05 | ○ | ○ | ○ | ○ |
| Ex. 4 | 20 | Fumed alumina | 13 | 0.2 | 0.5 | PEG | 400 | 001 | ○ | ○ | ○ | ○ |
| Ex. 5 | 10 | Fumed alumina | 13 | 0.2 | 0.5 | PEG | 400 | 0.01 | ○ | ○ | ○ | ○ |
| Ex. 6 | 10 | Fumed alumina | 13 | 0.2 | 0.5 | PEG | 200 | 0.01 | ○ | ○ | ○ | ○ |
| Ex. 7 | 10 | Fumed alumina | 13 | 0.2 | 0.5 | PEG | 1000 | 0.01 | ○ | ○ | ○ | ○ |
| Comp. Ex. 1 | 10 | Fumed alumina | 13 | 0.2 | 0.5 | PEG | 2000 | 0.01 | ○ | Δ | ○ | ○ |
| Comp. Ex. 2 | 10 | Fumed alumina | 13 | 0.2 | 0.5 | PEG | 4000 | 0.01 | ○ | Δ | ○ | ○ |
| Comp. Ex. 3 | 10 | Colloidal sifica | 40 | 0.05 | 0.5 | PEG | 400 | 0.01 | ○ | Δ | ○ | ○ |
| Comp. Ex. 4 | 10 | Fumed alumina | 13 | 0.2 | 0.5 | - | - | - | ○ | Δ | ○ | ○ |
| Comp. Ex. 5 | - | Fumed alumina | 15 | 0.15 | 0.5 | - | - | - | ○ | ○ | × | × |
| Comp. Ex. 6 | 10 | Aluminum oxide | 100 | 0.1 | 0.5 | - | - | - | × | Δ | × | × |
| Comp. Ex. 7 | 10 | Aluminum oxide | 100 | 0.1 | 0.1 | - | - | - | × | Δ | × | ○ |
| Comp. Ex. 8 | 10 | - | - | - | - | PEG | 400 | 0.01 | × | Δ | × | ○ |
| Comp. Ex. 9 | 10 | - | - | - | - | - | - | - | × | Δ | × | ○ |
| Comp. Ex. 10 | 10 | Sodium pyrophosphate | - | - | 0.2 | - | - | - | ○ | × | × | ○ |
| Comp. Ex. 11 | 10 | Sodium pyrophosphate | - | - | 0.2 | PEG | 400 | 0.01 | ○ | × | × | ○ |
| Comp. Ex. 12 | 10 | Fumed alumina | 15 | 0.15 | 0.5 | SPA | 2000 | 0.01 | × | ○ | × | ○ |
| Comp. Ex. 13 | 10 | Sodium pyrophosphate | - | - | 0.2 | SPA | 2000 | 0.01 | ○ | × | × | ○ |

Objects to be polished is a metal plate (10 cm × 10 cm square metal plate having a thickness of 1.5 mm), the surface of which is coated with a resin coating film (film thickness of 20 µm) which is clear coated and contains a urethane resin. The used polishing device is AL-2 manufactured by Udagawa Optical Machines Co., Ltd., and the material of the used polishing pad is an epoxy resin. The other polishing conditions are as follows. The polishing temperature was the temperature of the polishing surface of the polishing pad at the end of polishing measured using an infrared thermometer.

Polishing pressure: 6.86 kPa
Rotation rate of polishing platen: 130 min⁻¹
Polishing composition supply amount: 2 mL/min
Polishing time: 1 minute
Polishing temperature: 23°C

After finishing the polishing of the resin coated surface of the objects to be polished, the polishing removal rate and the number of scratches generated on the resin coated surface were evaluated. The results are shown in Table 1.

In Table 1, a case where the polishing removal rate was 1.5 µm/min or more is marked with the ○ mark and a case where the polishing removal rate was less than 1.5 µm/min is marked with the × mark. The polishing removal rate was calculated from the mass changes of the objects to be polished before and after polishing. Moreover, in Table 1, a case where the number of scratches was 0 per 100 cm² is marked with the ○ mark and a case where the number of scratches was 1 or more is marked with the × mark. The scratches are linear polishing damages and were measured by visual observation under irradiation with white light by a fluorescent light (500 lx illuminance).

Next, methods for evaluating the dispersibility of the abrasives of the polishing composition and the redispersibility of the precipitating abrasives are as follows.

The dispersibility of the abrasives was evaluated as follows. First, 100 mL of the polishing composition was placed in a columnar bottle having a full capacity of 130 mL and an internal diameter of 4.5 cm to be allowed to stand still for 60 minutes to precipitate the abrasives, and then the resultant substance was separated into the precipitating abrasives and a supernatant. Then, based on the distance between the top portion of the precipitating abrasives and the liquid surface of the supernatant, the dispersibility of the abrasives was evaluated. In Table 1, a case where the distance between the top portion of the precipitating abrasives and the liquid surface of the supernatant was 10 mm or less is marked with the ○ mark showing that the dispersibility was good and a case where the distance exceeded 10 mm is marked with the × mark showing that the dispersibility was poor.

The redispersibility of the precipitating abrasives was evaluated as follows. First, 100 mL of the polishing composition was placed in a columnar bottle having a full capacity of 130 mL and an internal diameter of 4.5 cm, and then rolling was given over 72 hours under the conditions where the amplitude was 4 cm and the rate was 250 spm (spin/min) . Thereafter, the columnar bottle was slowly laid, and then it was confirmed whether a layer of the precipitating abrasives collapsed.

In Table 1, a case where the entire precipitating abrasive layer easily collapsed merely by laying the columnar bottle is marked with the ○ mark showing that the redispersibility was good. A case where, merely by laying the columnar bottle, the precipitating abrasive layer almost collapsed but partially remained on a bottom portion of the columnar bottle is marked with the Δ mark showing that the redispersibility was slightly poor. A case where, even by laying the columnar bottle, the precipitating abrasive layer remained on the bottom surface of the columnar bottle is marked with the × mark showing that the redispersibility was poor.

As is understood from the results shown in Table 1, the polishing compositions of Examples 1 to 7 were excellent in the dispersibility of the abrasives and the redispersibility of the precipitating abrasives. Moreover, the resin polishing removal rate was high and scratches were not generated on the resin coated surface.

On the other hand, in the polishing compositions of Comparative Examples 1 and 2, the weight average molecular weight of the polyethylene glycol which was the caking inhibitor was excessively large, and therefore the redispersibility was slightly poor. In the polishing composition of Comparative Example 3, the average primary particle diameter of the colloidal silica which was the dispersibility improving agent exceeded 1/10 of the average primary particle diameter of the abrasives, and therefore the dispersibility was good but the redispersibility was slightly poor. The polishing composition of Comparative Example 4 did not contain the caking inhibitor, and therefore was excellent in the polishing removal rate, scratches, and dispersibility but the redispersibility was slightly poor. The polishing composition of Comparative Example 5 did not contain the abrasives, and therefore the polishing removal rate was poor.

In the polishing compositions of Comparative Examples 6 and 7, the average primary particle diameter of the metal oxide particles was excessively large relative to the average primary particle diameter of the abrasives, and therefore the dispersibility of the abrasives was poor. The polishing compositions of Comparative Examples 8 and 9 did not contain the dispersibility improving agent, and therefore the dispersibility was poor.

The polishing compositions of Comparative Examples 10, 11, and 13 were examples using sodium pyrophosphate which is a common dispersibility improving agent, and the dispersibility of the abrasives was good but the redispersibility was poor. More specifically, when sodium pyrophosphate was used as the dispersibility improving agent, the dispersibility of the abrasives was good but the redispersibility was poor. Therefore, not only in a case where the caking inhibitor was not used (Comparative Example 10) and a case where sodium polyacrylate was used as the caking inhibitor (Comparative Example 13) but also in a case where polyethylene glycol was used as the caking inhibitor (Comparative Example 11), the redispersibility became poor.

The polishing composition of Comparative Example 13 was an example using sodium polyacrylate which is a common caking inhibitor, and the redispersibility of the precipitating abrasives was poor.

The polishing composition of Comparative Example 12 contained sodium polyacrylate as the caking inhibitor, and therefore the dispersibility of the abrasives was impaired even when fumed alumina was used as the dispersibility improving agent. The redispersibility was evaluated to be good but this is because the dispersibility of the abrasives was poor so that the abrasives partially agglomerate, and therefore a precipitating abrasive layer easily collapsed.

### Reference Signs List

- 10: polishing pad
- 90: coated member

## Claims

1. A polishing composition comprising:
abrasives;
a liquid medium;
metal oxide particles; and
a water-soluble polymer, wherein
an average primary particle diameter of the metal oxide particles is 1/10 or less of an average primary particle diameter of the abrasives and a weight average molecular weight of the water-soluble polymer is 200 or more and 1000 or less.

2. The polishing composition according to Claim 1 wherein
the metal oxide is fumed alumina.

3. The polishing composition according to Claim 1 or 2, wherein
the water-soluble polymer comprises at least either one of polyethylene glycol and polypropylene glycol.

4. The polishing composition according to any one of Claims 1 to 3, wherein
the abrasives comprise aluminum oxide particles.
